# EUROPEAN PATENT APPLICATION

(11) **EP 1 729 424 A1**
(43) Date of publication of application: **06.12.2006**
(21) Application number: 06011109.3
(22) Date of filing: 30.05.2006
(51) Int. Cl.: H04B 1/38, H04B 1/40, H03H 7/46, H01Q 1/24

(54) **Apparatus for single three-band antenna**

(30) Priority: 30.05.2005 KR 20050045836
(71) Applicant: Samsung Electronics Co., Ltd., Suwon-si Gyeonggi-do (KR)
(72) Inventor: Lee, Seong-Wook, Yeongtong-gu Suwon-si Gyeonggi-do (KR); Kim, Jong-Yong, Yeongtong-gu Suwon-si Gyeonggi-do (KR)
(74) Representative: Grünecker, Kinkeldey, Stockmair & Schwanhäusser Anwaltssozietät

(57) **Abstract**

An apparatus for a single three-band intenna is provided. The apparatus includes a diplexer being connected to both a first-frequency communication module and a second-frequency communication module, and separating a first-frequency signal and a second-frequency signal from each other so that the two frequency signals share a single communication route; and a switch unit for performing a switching operation so as to connect a communication route either between the intenna and the diplexer, or between the intenna and a third-frequency communication module. The apparatus may include a controller for generating a control signal in order to control the switching operation of the switch unit, wherein the control signal is used to establish a first mode for transmitting/receiving the first-frequency signal or the second-frequency signal, or to establish a second mode for receiving a third-frequency signal.

## Description

The present invention relates to an antenna sharing apparatus, and more particularly to a three-band intenna sharing apparatus.

As the functions of mobile terminals, such as a portable telephone, become more and more various, it has been necessary to develop a mobile terminal capable of operating according to various communication schemes. A portable telephone capable of selectively receiving a code division multiple access (CDMA) communication service and a GSM (Global System for Mobile Communication) service is regarded as an example.

In order to realize such a multi-band mobile terminal, it is necessary to determine whether a plurality of antennas or a single antenna is provided for transmitting/receiving signals having various frequency bands. In a case of the single antenna, how to reduce loss in a signal transmission route, what kind of antennas (external antenna or internal antenna, i.e., intenna) must be used, and whether it is possible to ensure a space in the housing when the intenna is employed, all must be considered.

Accordingly, the present invention has been made to solve the above-mentioned problems occurring in the prior art.

It is the object of the present invention to provide an improved apparatus for a single three-band intenna and a method for operating same.

This object is solved by the subject matter of the independent claims.

Preferred embodiments are defined in the dependent claims.

According to an aspect of the present invention, there is provided an apparatus for a single three-band intenna, the apparatus including a diplexer being connected to both a first-frequency communication module and a second-frequency communication module, which separates a first-frequency signal and a second-frequency signal from each other so that the two frequency signals share a single communication route; and a switch unit for performing a switching operation so as to connect a communication route either between the intenna and the diplexer, or between the intenna and a third-frequency communication module. The first-frequency communication module, the second-frequency communication module, and the third-frequency communication module may be a code division multiple access (CDMA) module, a short range wireless communication module such as a Bluetooth™ module, and a global positioning system (GPS) module, respectively. In addition, the apparatus may include a controller for generating a control signal in order to control the switching operation of the switch unit. Herein, the control signal is used to establish a first mode for transmitting/receiving the first-frequency signal or the second-frequency signal, or to establish a second mode for receiving a third-frequency signal.

According to another aspect of the present invention, there is provided a method for operating the above apparatus for a single three-band intenna.

The present invention will be more apparent from the following detailed description taken in conjunction with the accompanying drawings, in which:

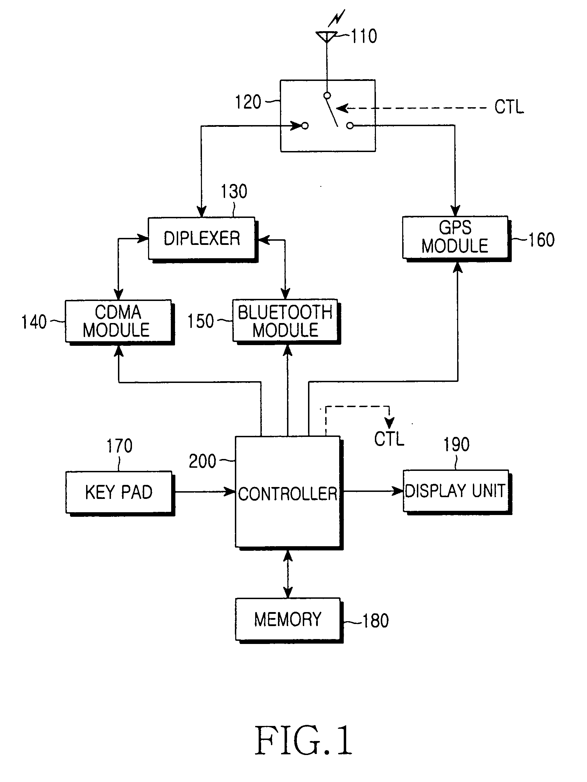

FIG. 1 is a block diagram illustrating the construction of a mobile terminal having a three-band intenna according to the present invention.

Hereinafter, preferred embodiments of the present invention will be described with reference to the accompanying drawings. In the following description, many particular items such as a detailed frequency band are shown, but these are given only for providing the general understanding of the present invention. It will be understood by those skilled in the art that the present invention can be embodied without including these particular items. In the following description, a detailed description of known functions and configurations incorporated herein will be omitted when it may obscure the subject matter of the present invention.

FIG. 1 is a block diagram illustrating the construction of a mobile terminal having a three-band intenna according to the present invention.

A diplexer 130 is connected to both a first-frequency communication module and a second-frequency communication module, and separates a first-frequency signal and a second-frequency signal so that the two signals may share a communication route. A switch unit 120 performs a switching operation such that a communication route may be connected either between an intenna 110 and the diplexer 130, or between the intenna 110 and a third-frequency communication module. A controller 200 generates a control signal "CTL" to control the switching operation of the switch unit 120. The control signal "CTL" is used to set the switch unit 120 to either a first mode, in which the first-frequency signal or the second-frequency signal is transmitted/received, or a second mode, in which a third-frequency signal is received. A key pad 170 allows the user to input a command or data, and may include numeral keys and function keys in the case of a portable telephone. Also, if selection of the first or second mode according to the present invention is initiated by a key input of the user, the key pad 170 may include a dedicated key. In addition, it goes without saying that a combination of existing keys may be used to select the first or second mode. A memory 180 stores data for supporting various functions of the mobile terminal and data resulting from the performance the functions. For instance, when selection of the first or second mode according to the present invention is initiated by a key input of the user, and the controller 200 senses this selection and controls mode setting, the memory 180 may store a program and data, which are used for the controller 200 to sense an input signal of the key (a dedicated key, a hot key, a combination of keys, etc.) and to perform a processing corresponding to the sensed signal. A display unit 190 displays the various operation states of the mobile terminal. For example, the display unit 190 may display an image or characters, which relate to the selection of the first or second mode and the mode setting status.

As shown in FIG. 1, the first-frequency, the second-frequency, and the third-frequency communication modules may be realized by a CDMA module 140, a short range wireless communication module system such as a Bluetooth™ module 150, and a global positioning system (GPS) module 160, respectively. In this case, the first mode may be used for CDMA communication or Bluetooth™ communication, and the second mode may be used for GPS communication.

The diplexer 130, which includes a high-pass filter and a low-pass filter, separates a CDMA signal of the 800MHz band and a Bluetooth™ signal of the 2.4GHz band from each other. The reason for separating the CDMA signal and the Bluetooth™ signal from each other among the three types of signals, is that the frequency proximity between the CDMA signal and the Bluetooth™ signal is smaller than that between the CDMA signal and a GPS signal having frequency band of 1.5 GHz. In other words, the performance of the diplexer 130 becomes better as the two frequencies are farther from each other.

Considering that the user may use the Bluetooth™ function while communicating, it is preferred to separate the two frequencies by means of the diplexer 130, which connected to both the CDMA module 140 and the Bluetooth™ module 150. However, when the user is using the Bluetooth™ function while communicating, it is impossible to use the GPS function.

As described, when the switch unit 120 is employed so as to connect the intenna 110 to only one side, a received signal is transmitted only to a corresponding module(s) (i.e. either to the CDMA module 140 and Bluetooth™ module 150 or to the GPS module 160), so that signal loss can be reduced, as compared with a case in which an intenna is connected to both sides so as to separate received signals later. In detail, when it is necessary to receive a GPS signal, the switch unit 120 is controlled by a control signal "CTL" and forms a route connecting the intenna 110 to only the GPS module 160 so as to transfer a received GPS signal to the GPS module 160. In this case, connection between the intenna 110 and the diplexer 130 is interrupted. Therefore, as compared with a case in which an intenna is connected to both sides so as to separate received signals later, the present invention shortens the length of a GPS-signal transmission route, thereby reducing signal loss.

The diplexer 130 functions only to separate signals depending on their frequency bands, so as to strengthen the isolation characteristic between the two frequency bands, and an RF system (e.g. a CDMA duplexer, a Bluetooth™ duplexer, etc.) for each communication scheme is individually included in each corresponding communication module.

According to the present invention as described above, since an apparatus for a single three-band intenna is realized using the switch unit and the diplexer, it is possible to transmit/receive signals of three types of frequencies through the single intenna, so that the efficiency of an intenna is improved, and signal loss in a signal transmission route is reduced, thereby improving the quality of the mobile terminal.

While the present invention has been shown and described with reference to certain preferred embodiments thereof, it will be understood by those skilled in the art that various changes in form and details may be made therein without departing from the scope of the invention as defined by the appended claims. Accordingly, the scope of the invention is not to be limited by the above embodiments but by the claims.

## Claims

1. An apparatus for a single three-band intenna, the apparatus comprising:
a diplexer being connected to both a first-frequency communication module and a second-frequency communication module, and separating a first-frequency signal and a second-frequency signal from each other so that the two frequency signals share a single communication route; and
a switch unit for performing a switching operation so as to connect a communication route either between the intenna and the diplexer, or between the intenna and a third-frequency communication module.

2. The apparatus as claimed in claim 1, wherein the first-frequency communication module, the second-frequency communication module, and the third-frequency communication module are a CDMA module, a short range wireless communication module such as a Bluetooth™ module, and a GPS module, respectively.

3. The apparatus as claimed in claim 1, further comprising a controller for generating a control signal in order to control the switching operation of the switch unit.

4. The apparatus as claimed in claim 3, wherein the control signal is used to establish a first mode for transmitting/receiving the first-frequency signal or the second-frequency signal, or to establish a second mode for receiving a third-frequency signal.

5. The apparatus as claimed in claim 4, wherein the first mode is used for CDMA communication and Bluetooth™ communication, and the second mode is used for GPS communication.

6. A method for operating an apparatus for a single three-band intenna according to one of claims 1 to 5.
